# EUROPEAN PATENT APPLICATION

(11) **EP 4 269 868 A1**
(43) Date of publication of application: **01.11.2023**
(21) Application number: 20966387.1
(22) Date of filing: 23.12.2020
(51) Int. Cl.: F21S 43/00, F21S 43/20

(54) **VEHICLE LAMP STRUCTURE AND AUTOMOBILE**

(71) Applicant: Zhejiang Smart Intelligence Technology Co., Ltd., Ningbo, Zhejiang 315336 (CN)
(72) Inventor: HAO, Lixia, Hangzhou Bay New District Ningbo, Zhejiang 315336 (CN); FU, Qiang, Hangzhou Bay New District Ningbo, Zhejiang 315336 (CN); CHEN, Xiaolei, Hangzhou Bay New District Ningbo, Zhejiang 15336 (CN); LOU, Longhai, Hangzhou Bay New District Ningbo, Zhejiang 315336 (CN); FANG, Mei, Hangzhou Bay New District Ningbo, Zhejiang Province 315336 (CN); GUO, Yanfeng, Hangzhou Bay New District Ningbo, Zhejiang 315336 (CN); JIANG, Youtao, Hangzhou Bay New District Ningbo, Zhejiang 315336 (CN)
(74) Representative: Zaboliene, Reda
(86) International application number: PCT/CN2020/138647
(87) International publication number: WO 2022/133809

(57) **Abstract**

The present application relates to the technical field of automobiles, and in particular, to a vehicle lamp structure and an automobile. The vehicle lamp structure comprises a light source assembly, a light distribution lens, and a light condensing member. The light source assembly and the light distribution lens are arranged on the two sides of the light condensing member. A plurality of third dermatoglyph areas are arranged on the light condensing member, and the light emitting surface of the light source assembly faces the third dermatoglyph areas; the light distribution lens is located on a propagation path of light emitted by the light source assembly, and the light distribution lens comprises an engagement structure for fixing, and a first surface and a second surface opposite to each other; a plurality of first dermatoglyph areas are arranged on the first surface at intervals, a plurality of second dermatoglyph areas are arranged on the second surface at intervals, and the propagation path of the light emitted by the light source assembly can be changed in the first dermatoglyph areas and the second dermatoglyph areas to form bright areas. In the present application, the first surface and the second surface of the light distribution lens are both provided with a plurality of dermatoglyph areas, so that light emitted by the light source is staggered in a view surface, a stereoscopic visual effect is generated, and then a 3D stereoscopic effect of light is satisfied.

## Description

### TECHNICAL FIELD

The present application relates to the technical field of automobiles, and in particular, to a vehicle lamp structure and an automobile.

### BACKGROUND

At present, in domestic and foreign automotive markets, due to requirements for appearance designs and light distribution functions, more and more vehicle types have added internal light distribution mirrors to their taillights. In design of automotive lighting fixtures, taillights of automobiles not only need to meet regulatory requirements for brightness and chromaticity, but also need to have a beautiful and uniform lighting effect. With the use of LED light sources, designs of taillights have become increasingly diverse. However, the designs of the taillights are limited by depths of lamp chambers, and most taillights are visually flat, that is, with poor depth sense and lack of three-dimensional sense when viewed from the front. At the same time, manufacturing cost of visually slightly three-dimensional taillight types is very high at present, which affects widespread application of three-dimensional taillights in a consumer market.

Based on the defect existing in the prior art, it is urgently required to research a vehicle lamp structure and an automobile to solve the above problem.

### SUMMARY OF THE DISCLOSURE

In order to solve the above technical problem, the present application provides a vehicle lamp structure and an automobile. In the present application, both a first surface and a second surface of a light distribution lens are provided with a plurality of dermatoglyph areas, so that light emitted by a light source is staggered in a view surface, a stereoscopic visual effect is generated, and thus a 3D stereoscopic effect of lamp light is met.

The present application discloses a vehicle lamp structure comprising a light source assembly, a light distribution lens, and a light condensing member; the light source assembly and the light distribution lens are arranged on two sides of the light condensing member, the light condensing member is provided thereon with a plurality of third dermatoglyph areas, and a light emitting surface of the light source assembly faces the third dermatoglyph areas; the light distribution lens is located on a propagation path of light emitted by the light source assembly, and the light distribution lens comprises an engagement structure for fixing and a first surface and a second surface arranged oppositely; the first surface is provided thereon with a plurality of first dermatoglyph areas at intervals, the second surface is provided thereon with a plurality of second dermatoglyph areas at intervals, and the propagation path of the light emitted by the light source assembly is changeable in the first dermatoglyph areas and the second dermatoglyph areas to form bright areas.

Furthermore, shapes of the first dermatoglyph areas, the second dermatoglyph areas, and the third dermatoglyph areas are all circular, elliptical, or triangular.

Furthermore, shapes of the first dermatoglyph areas and the second dermatoglyph areas are the same.

Furthermore, a thickness of the light distribution lens is 4mm-8mm.

Furthermore, a lamp holder and a first connection plate are further included; the first connection plate is connected with the lamp holder and the light distribution lens respectively, such that the light distribution lens is fixed relative to the lamp holder.

Furthermore, the first connection plate is provided thereon with an engagement groove, the engagement structure is arranged in the engagement groove, such that the first connection plate engages with the light distribution lens.

Furthermore, a second connection plate is included, the second connection plate is connected with the light source assembly, such that the second connection plate is fixed relative to the light source assembly.

Furthermore, the second connection plate is provided therein with a first mounting hole, the lamp holder is provided therein a second mounting hole, the second mounting hole is provided therein with a first connection member, the first connection member passes through the first mounting hole and the second mounting hole sequentially, such that the second connection plate is connected with the lamp holder.

Furthermore, the light source assembly comprises a plurality of light sources, the plurality of light sources are the same in structure, and the plurality of light sources are arranged on the second connection plate at intervals.

Furthermore, a ratio of an area of the second dermatoglyph area to an area of the first dermatoglyph area is between 2 and 1.

Furthermore, the first dermatoglyph areas and the second dermatoglyph areas are integrated with the light distribution lens by injection molding.

Furthermore, the light source is an energy-saving lamp or an LED lamp.

Another aspect of the present application protects an automobile comprising the aforementioned vehicle lamp structure.

Implementation of embodiments of the present application has the following advantageous effect: 1. in the present application, both the first surface and the second surface of the light distribution lens are provided with the plurality of dermatoglyph areas, so that light emitted by the light sources is staggered in a view surface, a stereoscopic visual effect is generated, and thus a 3D stereoscopic effect of lamp light is met; 2. in the present application, by arranging the light source assembly and the light condensing member, a brightness difference is generated between the first surface and the second surface of the light distribution lens, and thus optical graphics and stereoscopic graphics on a view surface are enhanced.

### BRIEF DESCRIPTION OF THE DRAWINGS

In order to explain technical solutions of the present application more clearly, drawings required to be used in description of embodiments or of the prior art will be briefly introduced below. It is obvious that the drawings in the following description are only some embodiments of the present application. For those skilled in the art, other drawings can be obtained according to these drawings without paying creative work.
FIG. 1 is a structural diagram of a vehicle lamp structure in an embodiment;
FIG. 2 is a structural diagram of a light condensing member connected with a light distribution lens in this embodiment;
FIG. 3 is a partial structural view of the light distribution lens in this embodiment.

Among them, the figure reference numbers in the drawings are in correspondence with the following: 1-light distribution lens; 2-light condensing member; 3-light source; 4-first connection plate; 5-lamp holder; 11-first dermatoglyph area; 12-second dermatoglyph area.

### DETAILED DESCRIPTION

The technical solutions in the embodiments of the present application will be described clearly and completely below in combination with the drawings in the embodiments of the present application. Obviously, the described embodiments are merely some embodiments of the present application, rather than all embodiments. Based on the embodiments of the present application, any other embodiment obtained by one of ordinary skill in the art on the premise of paying no creative work belongs to the protection scope of the present application.

It should be noted that the terms "first", "second", and the like in the description and claims of the present application, as well as the accompanying drawings, are used to distinguish similar objects and do not need to be used to describe a specific order or sequence. It should be understood that data used in this way may be interchanged in appropriate cases, so that embodiments of the present application described here can be implemented in orders other than those illustrated or described here. In addition, the terms "include" and "have", as well as any variations thereof, are intended to cover non-exclusive inclusion. For example, a process, method, system, product, or device that includes a series of steps or units need not be limited to those clearly listed steps or units, but may include other steps or units that are not clearly listed or inherent to these processes, methods, products, or devices.

The prior art has the following defect: with the use of LED light sources, designs of taillights have become increasingly diverse; however, the designs of the taillights are limited by depths of lamp chambers, and most taillights are visually flat, that is, with poor depth sense and lack of three-dimensional sense when viewed from the front; at the same time, manufacturing cost of visually slightly three-dimensional taillight types is very high at present, which affects widespread application of three-dimensional taillights in a consumer market.

Aiming the defect of the prior art, in the present application, both a first surface and a second surface of a light distribution lens are provided with a plurality of dermatoglyph areas, so that light emitted by light sources is staggered in a view surface, a stereoscopic visual effect is generated, and thus a 3D stereoscopic effect of lamp light is met; moreover, by arranging a light source assembly and a light condensing member, a brightness difference is generated between the first surface and the second surface of the light distribution lens, and thus optical graphics and stereoscopic graphics on a view surface are enhanced.

### Embodiment 1

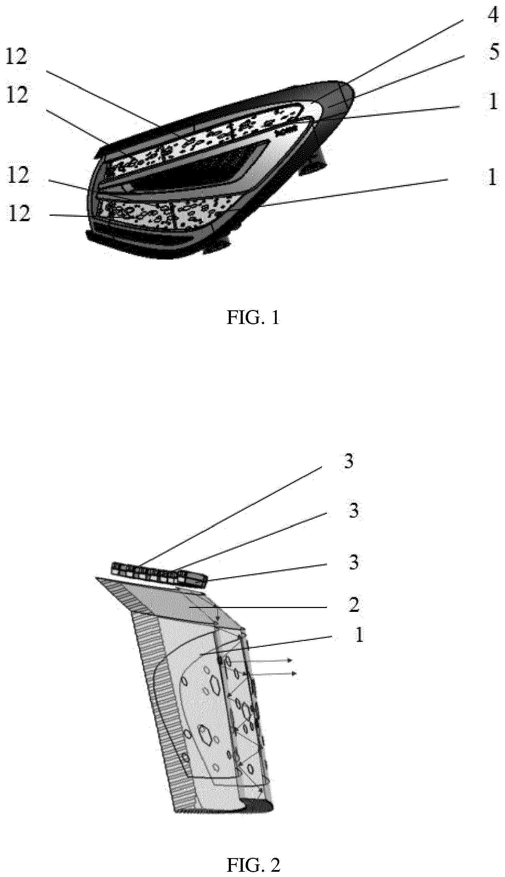

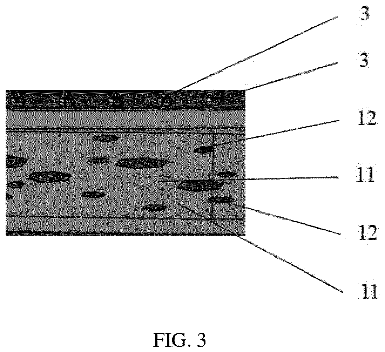

Referring to FIGS. 1-3, this embodiment provides a vehicle lamp structure comprising a light source assembly, a light distribution lens 1, and a light condensing member 2; the light source assembly and the light distribution lens 1 are respectively arranged on two sides of the light condensing member 2, the light condensing member 2 is provided thereon with a plurality of third dermatoglyph areas, and a light emitting surface of the light source assembly faces the third dermatoglyph areas; the light distribution lens 1 is located on a propagation path of light emitted by the light source assembly, and the light distribution lens 1 includes an engagement structure for fixing and a first surface and a second surface arranged oppositely; the first surface is provided thereon with a plurality of first dermatoglyph areas 11 at intervals, the second surface is provided thereon with a plurality of second dermatoglyph areas 12 at intervals, and the propagation path of the light emitted by the light source assembly is changeable in the first dermatoglyph areas 11 and the second dermatoglyph areas 12 to form bright areas.

It should be noted that, in the present application, both the first surface and the second surface of the light distribution lens 1 are provided with the plurality of dermatoglyph areas, a propagation path of light emitted by the light source assembly is changeable in the first dermatoglyph areas 11 and the second dermatoglyph areas 12 to form bright areas, so that light emitted by light sources 3 is staggered in a view surface, a stereoscopic visual effect is generated, and thus a 3D stereoscopic effect of lamp light is met; moreover, by arranging the light source assembly and the light condensing member 2, a brightness difference is generated between the first surface and the second surface of the light distribution lens 1, and thus optical graphics and stereoscopic graphics on a view surface are enhanced.

It should also be noted that the light distribution lens 1 is located on a propagation path for the light source assembly, wherein the propagation path refers to the propagation path of light emitted by the light source assembly, the light distribution lens 1 is located on the propagation path of light emitted by the light source assembly.

In some possible embodiments, the dermatoglyphs in the first dermatoglyphic areas 11, the second dermatoglyphic areas 12, and the third dermatoglyphic areas are formed by molds, and dermatoglyphs in the molds are formed by laser engraving.

In other possible embodiments, the first dermatoglyphic areas 11, the second dermatoglyphic areas 12, and the third dermatoglyphic areas are coated with coating layers with different refractive indexes from the light distribution lens.

In some possible embodiments, the light condensing member 2 includes a third surface and a fourth surface, the third surface is arranged to face the light emitting surface of the light source assembly, the light emitted by the light source assembly can propagate from the third surface into the light condensing member 2 and emit from the fourth surface; the fourth surface is arranged to face the light distribution lens 1, the light emitted from the fourth surface can propagate into the light distribution lens 1, and then a propagation path thereof is changed in the first dermatoglyph areas 11 and the second dermatoglyph areas 12 to form bright areas, so that light emitted by light sources 3 is staggered in a view surface, a stereoscopic visual effect is generated, and thus a 3D stereoscopic effect of lamp light is met.

In some possible embodiments, the third surface is completely a third dermatoglyphic area, thereby improving optical utilization and brightening 3D graphics of the visual surface.

Preferably, shapes of the first dermatoglyph areas 11, the second dermatoglyph areas 12, and the third dermatoglyph areas are all circular, elliptical, ,triangular, and so on.

In this embodiment, when the shapes of the first dermatoglyph areas 11, the second dermatoglyph areas 12, and the third dermatoglyph areas are all circular, a cylindrical 3D pattern can be seen from the second surface, which meets requirement of stereoscopic effect.

In some possible embodiments, the shapes of the first dermatoglyph areas 11, the second dermatoglyph areas 12, and the third dermatoglyph areas may also be any polygon.

Preferably, shapes of the first dermatoglyph areas 11 and the second dermatoglyph areas 12 are the same.

Preferably, a ratio of an area of the second dermatoglyph area 12 to an area of the first dermatoglyph area 11 is between 2 and 1.

In some possible embodiments, the ratio of an area of the second dermatoglyph area 12 to an area of the first dermatoglyph area 11 can be greater than 0 and less than 1, in this way, various 3D effect can be generated.

In other possible embodiments, the shapes of the plurality of first dermatoglyph areas 11 are the same, but sizes of the plurality of first dermatoglyph areas 11 are different, the plurality of first dermatoglyph areas 11 with different sizes are distributed on the first surface at intervals; the shapes of the plurality of second dermatoglyph areas 12 are the same, but sizes of the plurality of second dermatoglyph areas 12 are different, the plurality of second dermatoglyph areas 12 with different sizes are distributed on the second surface at intervals.

In other possible embodiments, both the shapes and the sizes of the plurality of first dermatoglyph areas 11 are the same; both the shapes and the sizes of the plurality of second dermatoglyph areas 12 are the same.

In other possible embodiments, a sum of the areas of the plurality of first dermatoglyph areas 11 is not less than 30% of the area of the first surface; a sum of the areas of the plurality of second dermatoglyph areas 12 is not less than 30% of the area of the second surface. In this way, it is resulted in that the first dermatoglyph areas 11 are evenly distributed on the first surface, and the second dermatoglyph areas 12 are evenly distributed on the second surface, thereby making lamp light be more uniform.

Preferably, a thickness of the light distribution lens 1 is 4mm-8mm.

It should be noted that, if the thickness of the light distribution lens 1 is less than 4mm, height differences of the dermatoglyphs on the first surface and the second surface of the light distribution lens 1 is too small to achieve 3D effect; although the stereoscopic effect may also be met when the thickness of the light distribution lens 1 is greater than 8mm, production of such a light distribution lens 1 requires slow injection molding, which has poor economic efficiency.

Preferably, a lamp holder 5 and a first connection plate 4 are further included; the first connection plate 4 is connected with the lamp holder 5 and the light distribution lens 1 respectively, such that the light distribution lens 1 is fixed relative to the lamp holder 5, and matching stability between the first connection plate 4 and the lamp holder 5 is ensured.

Specifically, the light distribution lens 1 is arranged to protrude on the first connection plate 4, it is ensured that the light distribution lens 1 can still protrude on the lamp holder 5 after the first connection plate 4 is mounted and fixed on the lamp holder 5.

Preferably, the first connection plate 4 is provided thereon with an engagement groove, the engagement structure is arranged in the engagement groove, such that the first connection plate 4 engages with the light distribution lens 1.

Specifically, the engagement groove is arranged along a circumference direction of the first connection plate 4, and the engagement groove is adapted to the engagement structure; the engagement structure is arranged on a circumference of the light distribution lens 1, and the engagement structure can be protrusions; the protrusions can be arranged in the engagement groove, so that the first connection plate 4 is engaged and fixed with the light distribution lens 1.

Specifically, the number of the protrusions is at least two, the two protrusions are respectively arranged at two opposite sides of the light distribution lens 1, and the two protrusions are arranged in the engagement groove such that the first connection plate 4 is fixed relative to the light distribution lens 1.

In some possible embodiments, the light distribution lens 1 is provided along the circumference thereof with an annular convex, the annular convex is arranged in the engagement groove, such that the light distribution lens 1 is fixed relative to the first connection plate 4.

Preferably, a second connection plate is further included; the second connection plate is connected with the light source assembly, such that the second connection plate is fixed relative to the light source assembly.

Specifically, a shape of the second connection plate is specifically arranged according to distribution of a plurality of light sources 3, and therefore is not limited here.

Preferably, the second connection plate is further provided therein with a first mounting hole, the lamp holder 5 is provided therein a second mounting hole, the second mounting hole is provided therein with a first connection member, the first connection member passes through the first mounting hole and the second mounting hole sequentially, such that the second connection plate is connected with the lamp holder 5.

In some possible embodiments, the second connecting plate is provided therein with the first mounting hole, and the lamp holder 5 is provided with a mounting column; the mounting column passes through the first mounting hole, so that the second connection plate is fixedly connected with the lamp holder 5. By setting the mounting column connected with the first mounting hole, mounting accuracy of the second connection plate and the lamp holder 5 is improved, and matching stability between the second connection plate and the lamp holder 5 is ensured.

Preferably, the light source assembly includes a plurality of light sources 3, structures of the plurality of light sources 3 are the same, and the plurality of light sources 3 are arranged on the second connection plate at intervals.

In some possible embodiments, the plurality of light sources 3 are arranged on the second connection plate at uniform intervals, such that the light emitted by the light source assembly can distribute uniformly, for example, the plurality of light sources 3 are arranged in array.

In other possible embodiments, the distribution manner of the plurality of light sources 3 can be adjusted according to actual requirements, and is not limited here.

In some possible embodiments, the vehicle lamp structure further includes an outer light distribution lens, the outer light distribution lens is arranged in a light propagation path of the light sources 3, and the outer light distribution lens is arranged at an outside of the light distribution lens 1. The outer light distribution lens is also made of transparent material, and the outer light distribution lens can provide a protection function for the light distribution lens 1.

Preferably, the light distribution lens 1 is made of transparent material.

In some possible embodiments, the light distribution lens 1 is formed by injection molding using PMMA or PC.

Preferably, the first dermatoglyph areas 11 and the second dermatoglyph areas 12 are integrated with the light distribution lens 1 by injection molding.

Preferably, the light sources 3 are energy-saving lamps or LED lamps.

A light propagation path in the vehicle lamp structure is as follows: the plurality of light sources 3 emit light, the light emitted by the light sources 3 propagates into the third surface of the light condensing member 2, emits from the fourth surface of the light condensing member 2, then propagates into the first surface of the light distribution lens 1 and emits from the second surface of the light distribution lens 1, and thus the propagation path is changed in the first dermatoglyph areas 11 and the second dermatoglyph areas 12 to form bright areas, so that the light emitted by the light sources 3 is staggered in a view surface, a stereoscopic visual effect is generated, and thus a 3D stereoscopic effect of lamp light is met.

Another aspect of the present application protects an automobile comprising the aforesaid vehicle lamp structure. The automobile with the vehicle lamp structure can make light emitted by the light sources 3 be staggered in a view surface, a stereoscopic visual effect is generated, and thus a 3D stereoscopic effect of lamp light is met, and it is also conducive to reduce production cost.

Although the present application has been described through preferred embodiments, the present application is not limited to the embodiments described herein and further includes various changes and variations made without departing from the scope of the present application.

In this specification, directional words "front", "back", "up", "down", and so on are defined based on positions of components in the figures and between the components, and are just for clarity and convenience of expressing the technical solution. It should be understood that use of the directional words should not limit the protection scope requested by the present application.

In this specification,, the above embodiments and the features in the embodiments can be combined with each other In the condition of no conflict.

The above disclosure is only a preferred embodiment of the present application, and of course, it should not be used to limit the scope of claims of the present application. Therefore, any equivalent change made according to the claims of the present application still fall within the scope covered by the present application.

## Claims

1. A vehicle lamp structure comprising a light source assembly, a light distribution lens (1), and a light condensing member (2); wherein the light source assembly and the light distribution lens (1) are arranged on two sides of the light condensing member (2), the light condensing member (2) is provided thereon with a plurality of third dermatoglyph areas, and a light emitting surface of the light source assembly faces the third dermatoglyph areas; the light distribution lens (1) is located on a propagation path of light emitted by the light source assembly, and the light distribution lens (1) comprises an engagement structure for fixing and a first surface and a second surface arranged oppositely; the first surface is provided thereon with a plurality of first dermatoglyph areas (11) at intervals, the second surface is provided thereon with a plurality of second dermatoglyph areas (12) at intervals, and the propagation path of the light emitted by the light source assembly is changeable in the first dermatoglyph areas (11) and the second dermatoglyph areas (12) to form bright areas.

2. The vehicle lamp structure according to claim 1, wherein shapes of the first dermatoglyph areas (11), the second dermatoglyph areas (12), and the third dermatoglyph areas are all circular, elliptical, or triangular.

3. The vehicle lamp structure according to claim 1, wherein shapes of the first dermatoglyph areas (11) and the second dermatoglyph areas (12) are the same.

4. The vehicle lamp structure according to claim 1, wherein a thickness of the light distribution lens (1) is 4mm-8mm.

5. The vehicle lamp structure according to claim 1, further comprising a lamp holder (5) and a first connection plate (4); wherein the first connection plate (4) is connected with the lamp holder (5) and the light distribution lens (1) respectively, such that the light distribution lens (1) is fixed relative to the lamp holder (5).

6. The vehicle lamp structure according to claim 5, wherein the first connection plate (4) is provided thereon with an engagement groove, the engagement structure is arranged in the engagement groove, such that the first connection plate (4) engages with the light distribution lens (1).

7. The vehicle lamp structure according to claim 5, further comprising a second connection plate, wherein the second connection plate is connected with the light source assembly, such that the second connection plate is fixed relative to the light source assembly.

8. The vehicle lamp structure according to claim 7, wherein the second connection plate is provided therein with a first mounting hole, the lamp holder (5) is provided therein a second mounting hole, the second mounting hole is provided therein with a first connection member, the first connection member passes through the first mounting hole and the second mounting hole sequentially, such that the second connection plate is connected with the lamp holder (5).

9. The vehicle lamp structure according to claim 7, wherein the light source assembly comprises a plurality of light sources (3), the plurality of light sources (3) are the same in structure, and the plurality of light sources (3) are arranged on the second connection plate at intervals.

10. The vehicle lamp structure according to claim 1, wherein a ratio of an area of the second dermatoglyph area (12) to an area of the first dermatoglyph area (1) is between 2 and 1.

11. The vehicle lamp structure according to claim 1, wherein the first dermatoglyph areas (11) and the second dermatoglyph areas (12) are integrated with the light distribution lens (1) by injection molding.

12. The vehicle lamp structure according to claim 1, wherein the light source (3) is an energy-saving lamp or an LED lamp.

13. An automobile comprising a vehicle lamp structure according to any one of claims 1-12.
